# EUROPEAN PATENT SPECIFICATION

(11) **EP 3 603 913 B1**
(45) Date of publication and mention of the grant of the patent: **07.07.2021**
(21) Application number: 19188784.3
(22) Date of filing: 29.07.2019
(51) Int. Cl.: B28D 1/04, B28D 1/00, B23D 45/10, B28D 1/22, B28D 1/24

(54) **CUTTING AND CHAMFERING HEAD, MULTIAXIAL MACHINE WITH SUCH A CUTTING AND CHAMFERING HEAD AND CUTTING AND CHAMFERING METHOD**
SCHNEID- UND ANFASKOPF, MEHRACHSIGE MASCHINE MIT EINEM SOLCHEN SCHNEID- UND ANFASKOPF SOWIE SCHNEID- UND ANFASVERFAHREN
TÊTE DE COUPE ET DE CHANFREINAGE, MACHINE MULTI-AXES COMPRENANT UNE TELLE TÊTE DE COUPE ET DE CHANFREINAGE ET MÉTHODE DE COUPE ET DE CHAMFREINAGE

(30) Priority: 02.08.2018 IT 201800007773
(43) Date of publication of application: 05.02.2020
(73) Proprietor: Donatoni, Giorgio, 37010 Cavaion Veronese (VR) (IT)
(72) Inventor: Donatoni, Giorgio, 37010 Cavaion Veronese (VR) (IT)
(74) Representative: Maroscia, Antonio

(56) References cited:
- WO-A1-2011/107872
- IT-B- 1 243 165
- IT-B- 1 247 180
- US-A- 1 909 001
- US-A1- 2011 303 209
- US-A1- 2018 178 408

## Description

### Field of the invention

The present invention generally finds application in the stone and ceramic processing industry and particularly relates to a cutting and chamfering head according to the preamble of claim 1, for use in a multiaxial machine tool.

The invention further relates to a multiaxial machine tool having the aforementioned cutting and chamfering head and its respective cutting and chamfering method.

### Background art

Such a cutting and chamfering head is known for example from US2018/178408A1. Machine tools have been long known in the stone and/or ceramic slab processing industry which comprise a portal structure for delimiting a cutting zone and at least one horizontal beam with a slab processing unit slidingly mounted thereto.

The processing operations performed by such machines include, for example, cutting, dressing, contouring, chamfering or the like and may require handling, loading/unloading and transfer of the products being processed from one work area to another.

Generally, slab cutting is carried out by a machine tool that comprises a carriage sliding on the main beam and a cutting head moving over the slab by means of an electrospindle with a blade cutting tool rotatably associated therewith.

Furthermore, the cutting head may be coupled to a slab chamfering tool of the slabs having a disc that can perform surface chamfering.

WO2015159270 discloses a machine tool for cutting stone slabs comprising a beam supported by a portal structure with a cutting head mounted thereon, which has a first electrospindle with a cutting blade whose axis of rotation is parallel to the slab to be cut.

Furthermore, the cutting head is removably coupled to a grinding wheel assembly having a second electrospindle with a disk adapted to create a chamfer or a precut on the slab before it is cut by the cutting blade.

Slab processing with this machine tool includes a first chamfering step by the grinding wheel assembly, a second separation step in which the disk is separated from the second electrospindle and the grinding wheel is lifted away from the slab and a third cutting step by the blade at the chamfer or precut that has been formed in the first processing step.

A first drawback of this arrangement is that separation of the disk from its electrospindle requires the steps of stopping the machine, lifting the grinding wheel assembly and finally positioning the cutting blade, with much time being taken to handle and align the blade with the chamfer or precut.

A further drawback of this arrangement is that misalignment of the cutting blade and the disk dramatically affects the overall throughput of the machine tool.

Furthermore, the provision of a single cutting blade allows only one type of processing to be performed, thereby increasing the overall product cutting times.

Another important drawback of this arrangement is that the installation of additional cutting blades is particularly difficult because it requires an additional carriage, with its cutting blade and chamfering disk, to be mounted to the beam.

In an attempt to at least partially obviate these drawbacks, machines or apparatus have been developed that include a plurality of mutually aligned cutting blades to form a plurality of stone slabs with a single cut.

EP2623283 discloses a machine tool comprising a plurality of parallel and aligned diamond blades having different and progressively increasing diameters and mounted to a corresponding plurality of parallel, spaced-apart motorized shafts.

The blades are adapted to make a single cut on a block, which is placed on a carriage that moves in a direction parallel to those of the blades.

A first drawback of this arrangement is that the provision of blades having different diameters adds complexity to the installation and requires longer maintenance times for the machine tool.

Furthermore, blade positioning and progressive alignment on the machine further increases the probability of alignment errors, with a consequent undesired increase of cutting thickness.

Another drawback is that the independent movement of the carriage increase the overall consumption and costs of the machine tool.

### Technical Problem

In view of the prior art, the technical problem addressed by the present invention is to provide a cutting and chamfering head for processing stone and/or ceramic slabs, a multiaxial machine tool and a cutting and chamfering method that can simplify processing and remarkably reduce the slab cutting and chamfering times.

### Disclosure of the invention

The object of the present invention is to obviate the above drawback, by providing a cutting and chamfering head as defined in claim 1, for processing stone and/or ceramic slabs, a multiaxial machine tool as defined in claim 13, and a cutting and chamfering method as defined in claim 14, that is highly efficient and relatively cost-effective.

A particular object of the present invention is to provide a cutting and chamfering head as described hereinbefore that affords very quick and simple slab cutting and chamfering operations.

A further particular object of the present invention is to provide a cutting head as described hereinbefore that can both cut and chamfer the slab in one pass.

Another object of the present invention is to provide a cutting and chamfering head, a multiaxial machine tool and a cutting and chamfering method as described hereinbefore that can reduce dead times between slab cutting and chamfering thereby increasing the overall throughput.

A further object of the present invention is to provide a cutting and chamfering head and a multiaxial machine tool as described hereinbefore, that can reduce the overall implementation and installation times.

Yet another object of the present invention is to provide a cutting and chamfering head and a multiaxial machine tool as described hereinbefore, that require no particular skill of an operator for handling thereof.

A further object of the present invention is to provide a cutting and chamfering head as described hereinbefore that affords adjustment of the relative height between the cutting blade and the chamfering disk.

These and other objects, as more clearly explained below, are fulfilled by a cutting and chamfering head for use in a multiaxial machine tool for stone and/or ceramic slab processing, as defined in claim 1, the head comprising a carriage adapted to move over the slab, a tool-holding frame mounted to the carriage and supporting at least one first blade and one second blade with respective substantially parallel axes of rotation and adjustment means for adjusting the relative height of the blades and their cutting depth.

The blades are substantially vertical, substantially aligned and vertically offset from each other so that the first blade will make the precut and the second blade will make the final cut of the slab, or vice versa.

In a peculiar aspect of the invention, the cutting head comprises at least one grinding wheel, which is mounted to the frame to create a chamfer along a cutting line that is substantially aligned with the first and second blades, the blades and the grinding wheel being configured to perform slab cutting and chamfering in one pass.

Advantageously, the frame is hinged to the carriage by means of a substantially horizontal pin, parallel to the axes of rotation, for pivotal movement of the frame and the pin is located along the frame proximate to the second blade or the grinding wheel to change the relative height of the blades.

With this combination of features, the slab may be cut and chamfered in one pass, by changing the relative height of the blades and the grinding wheel and reducing the overall processing times of the machine tool.

The invention also relates to a multiaxial machine tool for processing stone and/or ceramic slabs, as defined in claim 13 and the cutting and chamfering method therefor as defined in claim 14.

Advantageous embodiments of the invention are obtained in accordance with the dependent claims.

### Brief Description of The Drawings

Further features and advantages of the invention will be more apparent from the detailed description of a preferred, non-exclusive embodiment of a cutting and chamfering head and a multiaxial machine tool, which are described as non-limiting examples with the help of the annexed drawings, in which:
Fig. 1 is a perspective view of a multiaxial machine tool of the invention;
FIG. 2 is an enlarged view of the machine tool of Fig. 1;
FIGS. 3 and 4 are lateral and enlarged perspective views respectively of a cutting and chamfering head of the invention according to a first embodiment;
FIG. 5 is a lateral perspective view of a cutting and chamfering head of the invention according to a second embodiment;
FIGS. 6 and 7 are perspective enlarged and bottom views respectively of the cutting head of the invention;
FIG. 8 is a broken-away bottom view of a first detail of the head of the invention;
FIG. 9 is a perspective bottom view of a cutting and chamfering head of the invention according to a third embodiment;
FIG. 10 is an enlarged perspective view of the cutting head of the invention according to a fourth embodiment;
FIGS. 11A and 11B are lateral views of a cutting and chamfering head of the invention according to an alternative embodiment;
FIGS. 12A to 12D schematically show the cutting and chamfering method of the invention;
Figs. 13A and 13B schematically illustrate the step of the method of Fig. 11C with the head of Fig. 10.

### Detailed description of a preferred exemplary embodiment

Particularly referring to the figures, there is shown a cutting and chamfering head, generally designated by numeral 1, for use in a multiaxial machine tool 2 for processing stone and/or ceramic slabs L.

The cutting stone 1 and the machine tool 2 may be used to cut and shape slabs L made of a stone material, such as stone, marble, granite, conglomerate stone and concrete materials and to obtain a plurality of specially shaped portions L', L".

The machine tool 2 of the invention may comprise at least one substantially horizontal main beam 3 which is designed to move along first longitudinal guide means 4 secured to the ground, as disclosed in patent application EP2983879 owned by the Applicant.

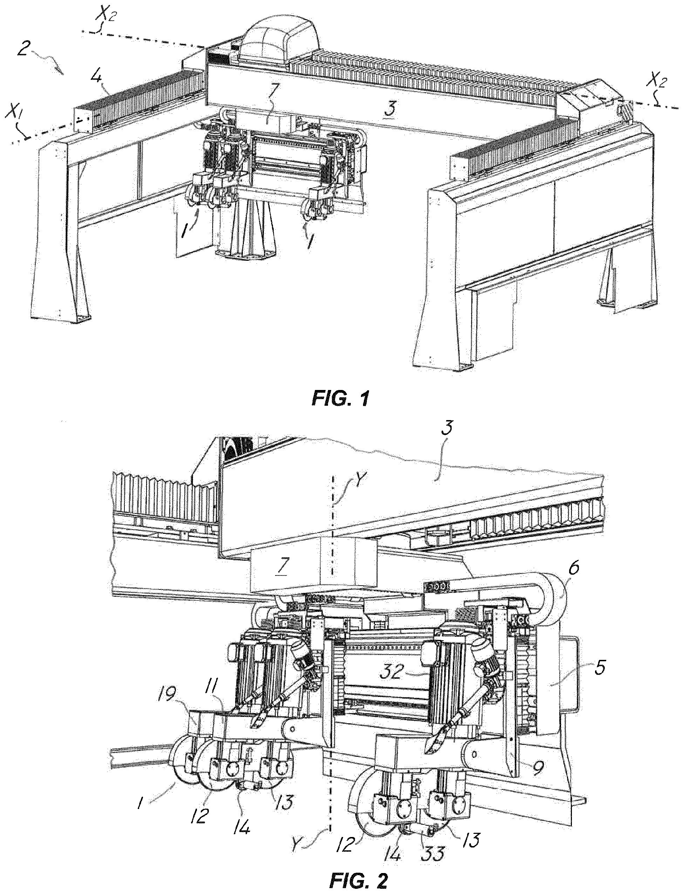

As best shown in FIG. 1, the machine 2 comprises at least one substantially horizontal secondary beam 5 operably associated with the main beam 3 and means for discontinuous feed of slabs L for loading/unloading them, not shown.

Advantageously, the machine 2 may comprise one or more cutting and chamfering heads 1 mounted to the secondary beam 5 and sliding along second guide means 6 associated with the secondary beam 5, to create cuts and chamfers in directions parallel to a common cutting and chamfering line C in one pass, as described below.

The secondary beam 5 may be mounted below the main beam 3 and be rotatably coupled to the latter via third guide means, 7 to rotate about a substantially vertical axis Y and change the direction of the common cutting and chamfering line C.

Furthermore, the secondary beam 5 may be designed for removable installation of the heads 1 and for removal and replacement thereof with one or more equal or different toolheads, i.e. having equal or different processing and/or handling tools, not shown.

By way of example, the tool-holding head may be selected from the group comprising water jets, drill bits or handling tools such using suction cups or vacuum. Furthermore, the machine tool 2 may be placed above a table for supporting the slabs L being processed, having a stationary or moving support surface 8.

In an alternative embodiment of the machine tool 2, not shown, the head 1 may be mounted to the main beam 3 and the table for supporting the slabs L may comprise a surface that is designed to rotate about a vertical axis to facilitate the orientation of the product being processed relative to the cutting and chamfering head 1.

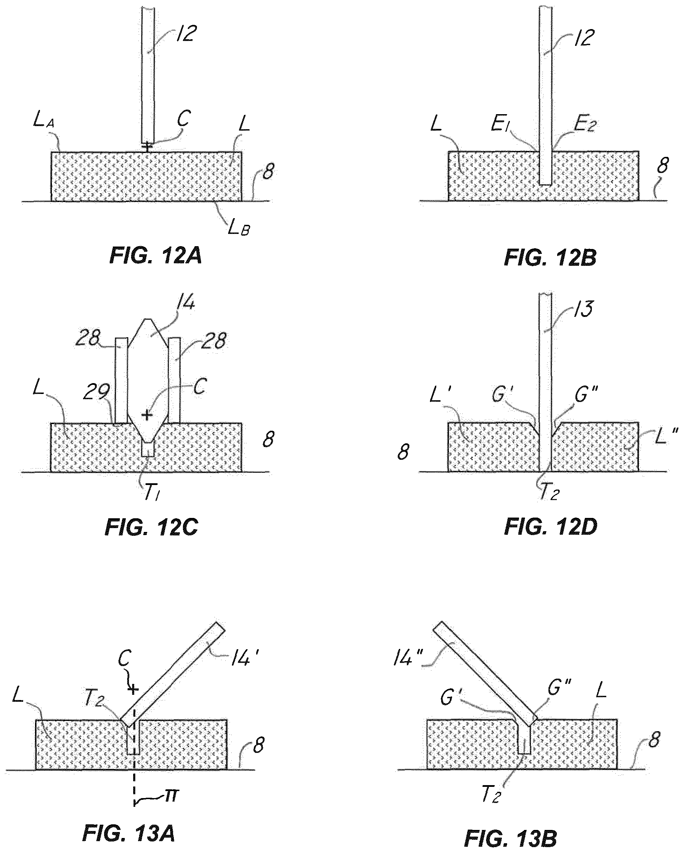

As is known per se, the slab L may comprise a substantially flat upwardly-facing top surface L_{A} flat which faces the cutting head 1, a substantially flat bottom surface L_{B} resting on the support surface 8 and a maximum thickness s which has a predetermined substantially constant value, as depicted in FIGS. 12A to 13B.

As shown in FIG. 2, the cutting and chamfering head 1 comprises a carriage 9 designed to move over the slab L along a first transverse axis X₁ and a second longitudinal axis X₂ by means of the respective first 4 and second 6 guide means.

Furthermore, the carriage 9 comprises substantially vertical drive means 10, which are designed to be coupled to the main beam 3 or the secondary beam 5 of the machine tool 2 that has the cutting and chamfering head 1 mounted thereto.

Advantageously, the cutting and chamfering head 1 comprises a tool-holding frame 11 which is mounted on the carriage 9 and supports at least one first blade 12 and one second blade 13 that are substantially vertical, substantially aligned and vertically offset from each other so that the first blade 12 will make the precut T₁ and the second blade 13 will make the final cut T₂ of the slab 1, or vice versa.

In a particular aspect of the invention, the head 1 comprises at least one grinding wheel 14, which is mounted to the frame 11 to create a chamfer G along a cutting line C that is substantially aligned with the first 12 and second 13, the grinding wheel 14 and the blades 12, 13 being configured to make the cut T₂ and create the chamfer G on the slab L in one pass.

Nevertheless, the cutting and chamfering head 1 may also comprise a greater number of cutting blades 12, 13 and chamfering wheels 14, without departure from the scope of the present invention as defined by the claims.

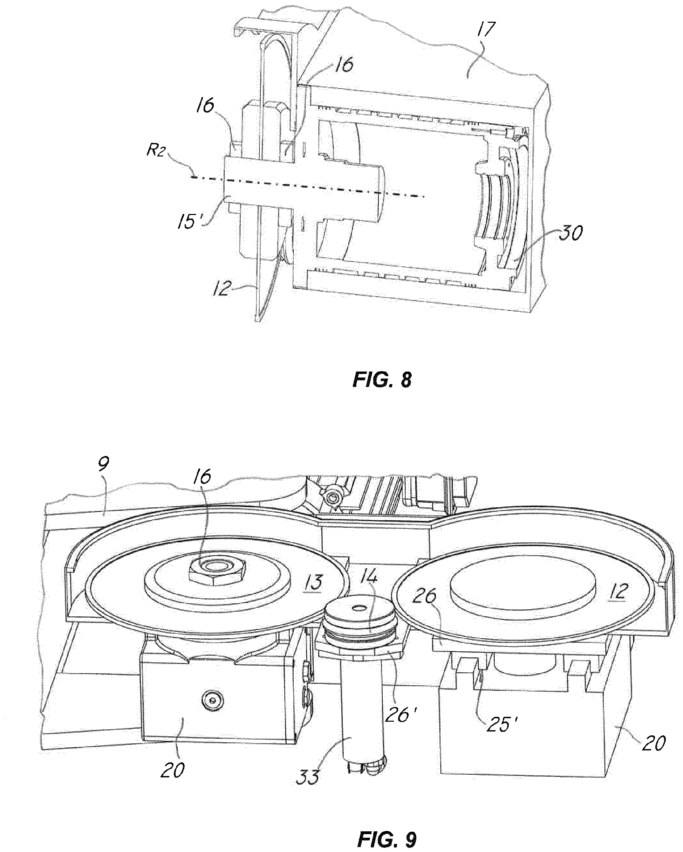

The blades 12, 13 may have respective substantially parallel axes of rotation R₁, R₂ and may be keyed to respective externally threaded rotating shafts 15', 15", each comprising a pair of internally threaded ring nuts 16, as shown in FIG. 8.

Each pair of ring nuts 16 may be associated with the blades 12, 13 on opposite sides thereof to translate each cutting blade 12, 13 along its respective rotating shaft 15', 15" and facilitate alignment thereof with the grinding wheel 14 and the cutting line C.

As shown in FIGS. 1 to 5, the tool-holding frame 11 may comprise a substantially closed longitudinal box element 17 having a substantially rectangular cross section, with a first longitudinal end 18 proximate to the carriage 9 and a second longitudinal end 19 distal from the carriage 9.

The box-like element 17 of the tool-holding frame 11 may comprise support means 20 for stably supporting the chamfering wheel 14 and the first 12 and second 13 cutting blades, and the latter may be placed below the box element 17, at the second 19 and first 18 longitudinal ends respectively.

Advantageously, the cutting head 1 may comprise adjustment means 21 for adjusting the relative height h_{R} of the blades 12, 13 and their cutting depth h₁, h₂.

According to an additional particular aspect of the invention, the frame 11 may be hinged to the carriage 9 by means of a substantially horizontal pin 22, parallel to the axes of rotation R₁, R₂ of the blades 12, 13 for pivotal movement of the frame 11.

Advantageously, the pin 22 is located along the frame 11 proximate to the second blade 13 or proximate to the grinding wheel 14 to accordingly change the relative height h_{R} of the blades 12, 13.

In a first preferred embodiment of the invention, as schematically shown in FIGS. 1 to 4, the pin 22 may be located proximate to the first longitudinal end 18 of the frame 11 and above the second blade 13 for the latter to maintain a substantially constant height position in response to the pivotal movement of the frame 11, the height of the first blade 12 being only changed.

Preferably, the carriage 9 may comprise a substantially L shape with a first vertical segment 9' extending parallel to the vertical axis Y and interacting with the vertical drive means 10 and a horizontal section 9" extending parallel to the longitudinal axis X₁, and comprising one end 23 with a transverse hole 24 adapted to interact with the pin 22 and with the first longitudinal end 18 of the box element 17.

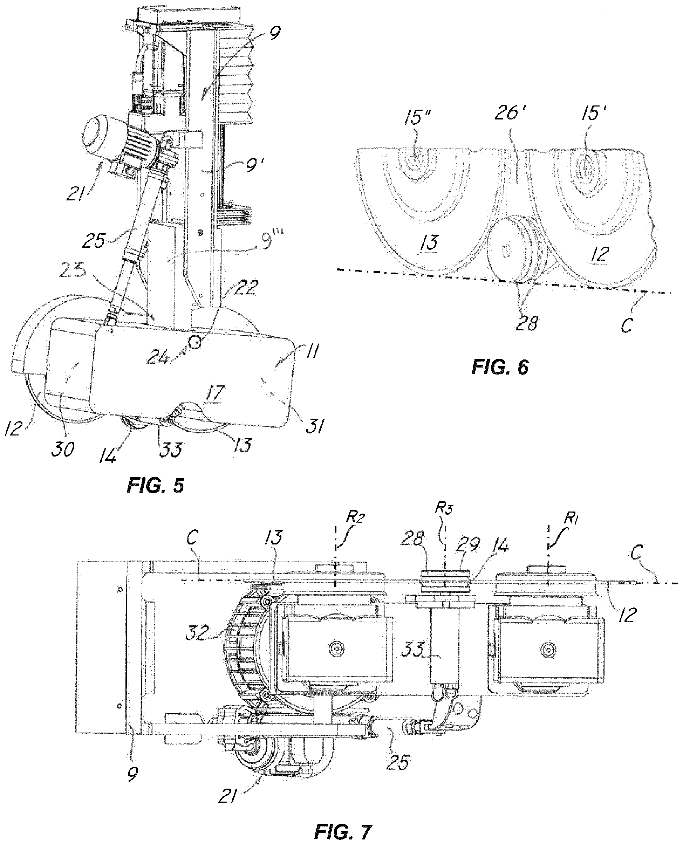

In a second embodiment, as shown in FIG. 5, the pin 22 may be in an intermediate position between the longitudinal ends 18, 19 of the frame 11 and above the grinding wheel 14, for the latter to maintain a substantially constant height position in response to the pivotal movement of the frame 11.

In this second embodiment, the carriage 9 may extend vertically in a direction parallel to the vertical axis Y and comprise a first vertical segment 9' interacting with the vertical drive means 10 and a second vertical segment 9''' comprising an end 23 with a transverse hole 24 adapted to interact with the pin 22.

As shown in FIGS. 1 to 5, the adjustment means 21 may comprise an actuator 25 interposed between the carriage 9 and the frame 11 for imparting a controlled pivotal movement to the frame 11.

Thus, the first cutting blade 12 may make a precut T₁ in the slab L with an adjustable pre-cutting depth h₁ that is smaller than the thickness s of the slab L, whereas the second cutting blade 13 will be able to make the final cut T₂ of the slab L, with an adjustable cutting depth h₂ that is equal to or greater than the thickness s of the slab L.

By way of example and without limitation, the pre-cutting depth h₁ in the slab L being processed may be 50 % of the thickness s and the cutting depth h₂ may be 100% of the thickness s.

The actuator 25 may have one end fixed to the carriage 9 in a position that is vertically offset from the pin 22, level with the first vertical segment 9', and an opposite end connected to the frame 11, proximate to the second longitudinal end 19 of the frame 11 and distal from the pin 22.

In a third embodiment, as shown in FIG. 9, the adjustment means 21 may comprise at least one substantially vertical slide 26 associated with one of the blades 12, 13 and the cutting head 1 may comprise a second actuator 25' acting on the slide 26 in order to allow to move independently of the other blade 13, 12 and accordingly change the relative height h_{R} of the latter.

The second actuator 25' may be mounted at the support means 20 to vertically move the slide 26 and may be selected from the group comprising a linear motor, belt means, a gear wheel operating with a pinion, a pair of motorized wheels acting on a pair of parallel rails or equivalent means adapted to move the slide 26 along a vertical axis.

As shown in FIG. 6, the chamfering wheel 14 may be mounted below the frame 11 and be interposed between the first 12 and second 13 cutting blades, so that the first blade 12 will make a precut T₁ on the slab L along the cutting line C, the wheel 14 will create a chamfer G at the precut T₁ and finally the second blade 13 will make the final cut T₂ of the pre-cut and chamfered slab L along the cutting line C.

Preferably, the chamfering wheel 14 may comprise longitudinal positioning means, not shown, for automatic or manual variation of the longitudinal position of the grinding wheel 14 relative to the first 12 and second 13 cutting blades, such that a chamfer G may be created on the slab L before the latter is pre-cut by the first blade 12 or after the cut T₂ made by the second blade 13.

As is known per se, the first 12 and second 13 blades may have a substantially disk shape and the grinding wheel 14 may have a diamond surface and have a substantially V-shaped cross section to chamfer the upper edges E₁, E₂ of the precut T₁ or the cut T₂ of the slab L along the cutting line C.

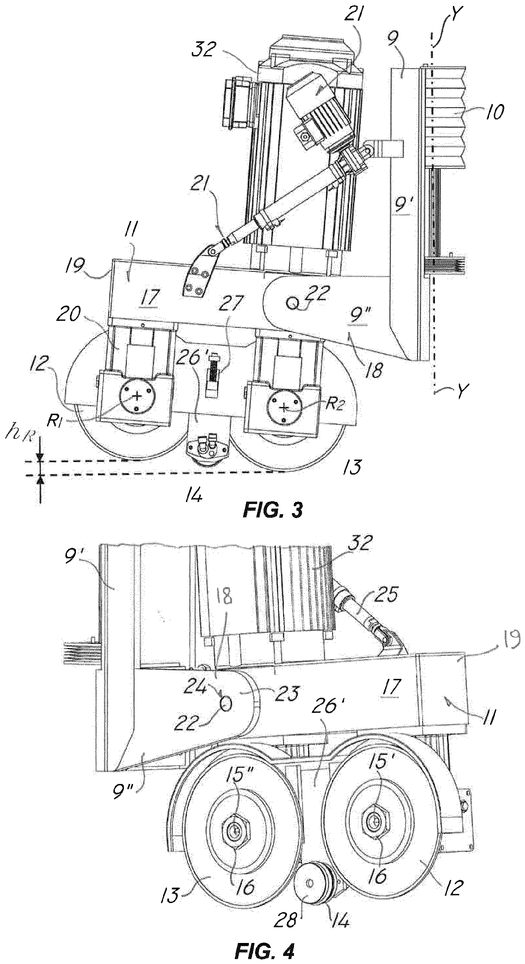

As shown in FIGS. 3 to 6, the grinding wheel 14 may be mounted to a substantially vertical guide 26' and may be pushed downwards by elastic means 27 that can be adjusted by screw means or the like to adjust the working pressure during chamfering.

The elastic means 27 may be interposed between the box element 17 and the axis of rotation R₃ of the grinding wheel 14 and may comprise a vertical spring with an adjustable coefficient of elasticity, an adjustable pneumatic system or an operatively controlled hydraulic system.

Advantageously, the grinding wheel 14 may comprise a pair of idle wheels 28 mounted to opposite sides thereof and having a smaller diameter than the grinding wheel 14 to define limit stop means with their outer surface 29 to automatically or manually adjust the chamfering depth of the slab L, as depicted in FIGS. 7 and 12C.

Furthermore, the chamfering depth and the height of the first 12 and second 13 blades from the top surface L_{A} of the slab L may be also adjusted by the substantially vertical drive means 10 mounted to the carriage 9.

As is known per se, the first 12 and second 13 blades are motorized by the use of respective electrospindles 30, 31 or a single electrospindle 32 connected to the blades 12, 13 via a belt drive or the like, as best described below.

As shown in FIGS. 1 to 4, in the first embodiment, the head 1 may comprise a single vertical electrospindle 32, which is rigidly joined to the box element 17 and placed thereabove at the first longitudinal end 18, and which may be mounted substantially orthogonal to the axis of rotation R₂ of the second cutting blade 13.

Rotational motion may be transferred to the blades 12, 13 via a belt drive or the like, not shown, possibly placed inside the box element 17 and having with appropriate speed changers to rotate the blades 12, 13, and possibly also the grinding wheel 14, at the same speed or at different speeds.

As shown in FIG. 5, in the second embodiment each blade 12, 13 may comprise a respective horizontal electrospindle 30, 31 having a variable rotation speed, placed below the box element 17 and coaxial with its respective axis of rotation R₁, R₂.

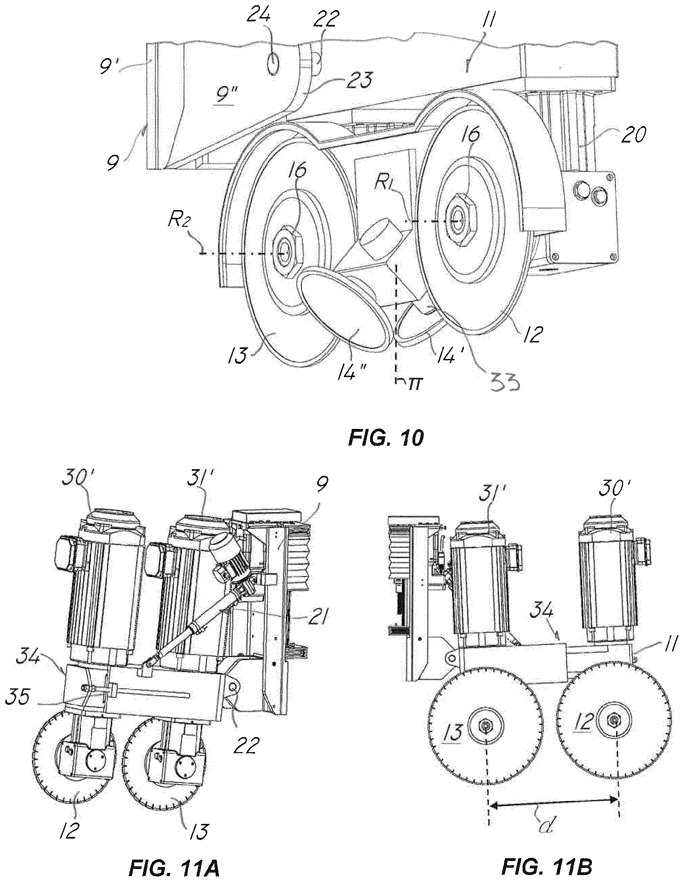

In a fourth embodiment of the invention, the cutting and chamfering head 1 may comprise a pair of grinding wheels 14', 14", which are mounted to the tool-holding frame 11 in a symmetrical position with respect to a substantially vertical plane π passing through the cutting line C, and are substantially orthogonal to and longitudinally offset from each other to create respective chamfers G', G" adapted to define the substantially V-shaped cross section, as shown in FIGS. 10 and 13.

Preferably, the grinding wheels 14', 14", or the grinding wheel 14 may be driven by respective pneumatic or electric motors 33 having axes of rotation coaxial with those of their respective grinding wheels 14, 14', 14".

In an alternative embodiment of the invention, as shown in FIG. 11, each blade 12, 13 may comprise a respective vertical electrospindle 30', 31' having a variable rotation speed, which is rigidly joined to the box element 17 and is placed thereabove at the first 18 and second 19 longitudinal ends respectively.

In this embodiment, the vertical electrospindles 30', 31' may be mounted substantially at right angles to the axis of rotation R₁ of the first cutting blade 12 and the axis R₂ of the second cutting blade 13 respectively.

Advantageously, each electrospindle 30, 30', 31, 31', 32 may be associated with substantially horizontal drive means 34 for horizontal translation of each blade 12, 13.

These horizontal drive means 34 may both facilitate alignment of the blades 12, 13 with the grinding wheel 14 and the cutting line C, and ensure that the distance d is maintained therebetween along the cutting line C for installation of cutting blades 12, 13 with different diameters.

Thus, as best shown in FIG. 11, the horizontal drive means 34 may comprise a substantially horizontal slide 35 which is rigidly joined to the box element 17, and is adapted to increase/decrease the distance d between the axes of rotation R₁, R₂ of the blades 12, 13.

As is known per se, a control unit, not shown, may be provided, which is connected to the guide means, 4, 6, 7, to the vertical drive means 10, to the adjustment means 21 for adjusting the vertical offset of the first blade 12 from the second blade 13, to the elastic positioning and means 27 and the limit-stop means 28 for the grinding wheel 14, to the substantially horizontal drive means 34, as well as to electrospindles 30, 30', 31, 31', 32 and to the motor 33 to control the operation of the multiaxial machine tool 2 and the head/s 1.

In a further aspect, the invention relates to a method of cutting and chamfering a stone and/or ceramic slab L using one or more cutting and chamfering heads 1 as described above, as shown in FIGS. 12A to 12D.

The method of the invention includes a first step of a) lying a slab L having a substantially constant maximum thickness s on a support surface 8, a step of b) moving at least one cutting and chamfering head 1 along the cutting line C and a step of c) cutting the slab L by actuating the first blade 12 along the cutting line C to make a precut T₁ having an adjustable depth h₁ that is smaller than the thickness s of the slab L.

The method further comprises a step of d) chamfering the upper edges E₁, E₂ of the pre-cut slab L along the line C by actuating the chamfering wheel 14 to create a chamfer G having a substantially V-shaped cross section.

The final step is a step of e) final cutting the pre-cut and chamfered slab L along the cutting line C by actuating the second blade 13 to obtain a plurality of appropriately shaped portions L', L" and to make a cut T₂ having an adjustable depth h₂ that is equal to or greater than the thickness s of the slab L.

The first blade 12, the grinding wheel 14 and the second blade 13 are aligned in succession along the line C for one-pass pre-cutting T₁, chamfering G and final cutting T₂ of the slab L.

As shown in FIGS. 13A and 13B, the chamfering step d) may be carried out by the pair of longitudinally offset grinding wheels 14, 14" which are adapted to create respective chamfers G', G".

It will be appreciated from the foregoing that the cutting and chamfering head, the multiaxial machine tool and the cutting and chamfering method fulfill the intended objects and particularly simplify processing and remarkably reduce the slab cutting and chamfering times.

While the cutting head and the machine tool have been described with particular reference to the accompanying figures, the numerals referred to in the disclosure and claims are only used for the sake of a better intelligibility of the invention and shall not be intended to limit the claimed scope in any manner.

### Industrial Applicability

The present invention may find application in industry, because it can be produced on an industrial scale in factories of the stone and/or ceramic material processing industry.

## Claims

1. A cutting and chamfering head (1) for use in a multiaxial machine tool (2) for processing stone and/or ceramic slabs (L), which head (1) comprises:
- a carriage (9) that is movable over the slab (L);
- a tool-holding frame (11) mounted to said carriage (9) and adapted to support at least one first blade (12) and one second blade (13), having substantially parallel rotation axes (R₁, R₂);
- adjustment means (21) for adjusting the relative height (h_{R}) of said blades (12, 13) and their cutting depth (h₁, h₂)
wherein said blades (12, 13) are substantially vertical, substantially aligned and vertically offset from each other so that said first blade (12) makes the precut and said second blade (13) makes the final cut of the slab (L), or vice versa;
**characterized in that** it comprises at least one grinding wheel (14) mounted to said frame (11) to create a chamfer (G) along a cutting line (C) substantially aligned with said first blade (12) and said second blade (13), said blades (12, 13) and said grinding wheel (14) being configured to cut and chamfer the slab (L) in one single pass, said frame (11) being hinged to said carriage (9) via a substantially horizontal pin (22), parallel to said rotation axes (R₁, R₂) to allow said frame (11) to pivot, said pin (22) being located along said frame (11) proximate to said second blade (13) or said grinding wheel (14) to change the relative height (h_{R}) of said blades (12, 13).

2. Cutting and chamfering head as claimed in claim 1, **characterized in that** said pin (22) is located proximate to a first longitudinal end (18) of said frame (11) and above said second blade (13) so that this latter maintains a substantially constant height in response to the pivotal movement of said frame (11) thereby changing only the height of said first blade (12).

3. Cutting and chamfering head as claimed in claim 1, **characterized in that** said pin (22) is in an intermediate position between the longitudinal ends (18, 19) of said frame (11) and above said grinding wheel (14), so that this latter maintains a substantially constant height in response to the pivotal movement of said frame (11).

4. Cutting and chamfering head as claimed in claim 1, **characterized in that** said adjustment means (21) comprise an actuator (25) interposed between said carriage (9) and said frame (11) for imparting a controlled pivotal movement to said frame (11).

5. Cutting and chamfering head as claimed in claim 4, **characterized in that** said actuator (25) has one end fixed to said carriage (9) in a vertically offset position relative to said pin (22) and an opposite end connected to said frame (11) proximate to a second longitudinal end (19) of said frame (11) and distal from said pin (22).

6. Cutting and chamfering head as claimed in claim 1, **characterized in that** said adjustment means (21) comprise at least one substantially vertical slide (26) associated with one of said blades (12, 13), a second actuator (25') being provided, which acts on said at least one slide (26) to allow it to move independently of the other of said blades (13, 12) thereby changing their relative height (h_{R}).

7. Cutting and chamfering head as claimed in claim 1, **characterized in that** said blades (12, 13) are keyed to respective externally threaded rotating shafts (15', 15"), each comprising a pair of internally threaded ring nuts (16), each of said pair of ring nuts (16) being associated with said blades (12, 13) on opposite sides thereof to translate each of said blades (12, 13) along their respective rotating shafts (15', 15") and facilitate alignment thereof with said grinding wheel (14) and said cutting line (C).

8. Cutting and chamfering head as claimed in claim 1, **characterized in that** said blades (12, 13) are driven by respective electrospindles (30, 31) or a single electrospindle (33) connected to said blades (12, 13) via a belt drive or the like.

9. Cutting and chamfering head as claimed in one or more of the preceding claims, **characterized in that** said blades (12, 13) have a substantially disk shape and said grinding wheel (14) has a substantially V-shaped cross section.

10. Cutting and chamfering head as claimed in one or more of preceding claims, **characterized in that** said grinding wheel (14) is mounted to a substantially vertical guide (26') and is pushed downwards by elastic means (27) that can be adjusted by screw means or the like to adjust the working pressure during chamfering.

11. Cutting and chamfering head as claimed in claim 1, **characterized by** comprising a pair of idle wheels (28) associated with said grinding wheel (14) on opposite sides thereof and having a smaller diameter than said grinding wheel (14) to define limit-stop means with their outer surface (29) for adjusting the chamfering depth of the slab (L).

12. Cutting and chamfering head as claimed in claim 1, **characterized by** comprising a pair of grinding wheels (14', 14") mounted to said frame (11) in a symmetrical position with respect to a substantially vertical plane (π) passing through said cutting line (C), said grinding wheels (14', 14") being substantially orthogonal to each other and longitudinally offset to create respective chamfers (G', G") which are adapted to define said substantially V-shaped cross section.

13. A multiaxial machine tool (2) for processing stone and/or ceramic slabs (L), comprising:
- at least one substantially horizontal main beam (3), which is adapted to move along first longitudinal guide means (4) secured to the ground;
- at least one substantially horizontal secondary beam (5) which is operably associated with said main beam (3);
- means for discontinuous feed of slabs (L) for loading/unloading thereof;
- one or more cutting and chamfering heads (1) mounted to said secondary beam (5) for processing the slabs (L);
**characterized in that** said one or more cutting and chamfering heads (1) are according to one or more of the preceding claims, said one or more cutting and chamfering heads (1) being adapted to slide along second guide means (6) associated with said secondary beam (5) for creating cuts and chamfers in directions parallel to a common cutting and chamfering line (C) in one single pass.

14. A method of cutting and chamfering a stone or ceramic slab (L) by means of one or more cutting and chamfering heads (1) according to one or more of claims 1 to 13, which method comprises the following steps:
a) placing a slab (L) with a substantially constant thickness (s) on a support surface (8);
b) moving at least one cutting and chamfering head (1) having first (12) and a second (13) cutting blades along a cutting line (C), said cutting head (1) having at least one chamfering grinding wheel (14) with a substantially "V"-shaped cross section;
c) pre-cutting the slab (L) by actuating said first blade (12) along said cutting line (C) with an adjustable depth (hi) that is smaller than the thickness (s) of the slab (L);
d) chamfering the pre-cut slab (L) along said line (C) by actuating said grinding wheel (14);
e) final cutting the pre-cut and chamfered slab (L) along said cutting line (C) by actuating said second blade (13);
wherein said first blade (12), said at least one grinding wheel (14) and said second blade (13) are aligned in succession along said cutting line (C) for one-pass pre-cutting (T₁), chamfering (G) and final cutting (T₂) of the slab (L); and
wherein the relative height (h_{R}) of said first blade (12) and said second blade (13) is changed to maintain a constant height position of one of said blades (12, 13) or of said grinding wheel (14).

## Patentansprüche

1. Schneid- und Anfaskopf (1) zur Verwendung in einer mehrachsigen Werkzeugmaschine (2) zur Verarbeitung von Stein- und/oder Keramikplatten (L), wobei der Kopf (1) umfasst:
- einen Wagen (9), der über die Platte (L) beweglich ist;
- einen Werkzeughalterahmen (11), der an dem Schlitten (9) angebracht ist und dazu ausgelegt ist, mindestens eine erste Klinge (12) und eine zweite Klinge (13) mit im wesentlichen parallelen Drehachsen (R₁, R₂) zu tragen;
- Einstellmittel (21) zum Einstellen der relativen Höhe (h_{R}) der Klingen (12, 13) und ihrer Schnitttiefe (h₁, h₂)
wobei die Klingen (12, 13) im wesentlichen vertikal, im wesentlichen ausgerichtet und vertikal voneinander versetzt sind, so dass die erste Klinge (12) den Vorschnitt macht und die zweite Klinge (13) den endgültigen Schnitt der Platte (L) macht, oder umgekehrt;
**dadurch gekennzeichnet, dass** er mindestens eine Schleifscheibe (14) umfasst, die an dem Rahmen (11) angebracht ist, um eine Abfasung (G) entlang einer Schnittlinie (C) zu erzeugen, die im Wesentlichen mit der ersten Klinge (12) und der zweiten Klinge (13) ausgerichtet ist, wobei die Klingen (12, 13) und die Schleifscheibe (14) konfiguriert sind, um die Platte (L) in einem einzigen Durchgang zu schneiden und anzufasen, wobei der Rahmen (11) über einen im wesentlichen horizontalen Stift (22) parallel zu den Drehachsen (R₁, R₂) an dem Schlitten (9) angelenkt ist, damit sich der Rahmen (11) drehen kann; wobei sich der Stift (22) entlang des Rahmens (11) in der Nähe der zweiten Klinge (13) oder der Schleifscheibe (14) befindet, um die relative Höhe (h_{R}) der Klingen (12, 13) zu ändern.

2. Schneid- und Anfaskopf nach Anspruch 1, **dadurch gekennzeichnet, dass** der Stift (22) nahe einem ersten Längsende (18) des Rahmens (11) und über der zweiten Klinge (13) angeordnet ist, so dass letztere als Reaktion auf die Schwenkbewegung des Rahmens (11) eine im wesentlichen konstante Höhe beibehält, wodurch nur die Höhe der ersten Klinge (12) geändert wird.

3. Schneid- und Anfaskopf nach Anspruch 1, **dadurch gekennzeichnet, dass** sich der Stift (22) in einer Zwischenstellung zwischen den Längsenden (18, 19) des Rahmens (11) und über der Schleifscheibe (14) befindet, so dass diese als Reaktion auf die Schwenkbewegung des Rahmens (11) eine im wesentlichen konstante Höhe beibehält.

4. Schneid- und Anfaskopf nach Anspruch 1, **dadurch gekennzeichnet, dass** das Einstellmittel (21) einen Aktuator (25) umfasst, der zwischen dem Wagen (9) und dem Rahmen (11) angeordnet ist, um dem Rahmen (11) eine gesteuerte Schwenkbewegung zu verleihen.

5. Schneid- und Anfaskopf nach Anspruch 4, **dadurch gekennzeichnet, dass** der Aktuator (25) ein Ende aufweist, das an dem Wagen (9) in einer vertikal versetzten Position relativ zu dem Stift (22) befestigt ist, und ein gegenüberliegendes Ende aufweist, das mit dem Rahmen (11) nahe einem zweiten Längsende (19) des Rahmens (11) und distal von dem Stift (22) verbunden ist.

6. Schneid- und Anfaskopf nach Anspruch 1, **dadurch gekennzeichnet, dass** das Einstellmittel (21) mindestens einen im wesentlichen vertikalen Schlitten (26) umfasst, der einem der Wagen (12, 13) zugeordnet ist, wobei ein zweiter Aktuator (25') vorgesehen ist, der auf den mindestens einen Schlitten (26) einwirkt, damit er sich unabhängig von der anderen Klinge (13, 12) bewegen kann, wodurch sich ihre relative Höhe (h_{R}) ändert.

7. Schneid- und Anfaskopf nach Anspruch 1, **dadurch gekennzeichnet, dass** die Klingen (12, 13) mit entsprechenden Außengewindedrehwellen (15', 15") verkeilt sind, die jeweils ein Paar Innengewinderingmuttern (16) umfassen, wobei das Paar von Ringmuttern (16) mit den Klingen (12, 13) auf gegenüberliegenden Seiten davon verbunden ist, um jede der Klingen (12, 13) entlang ihrer jeweiligen rotierenden Wellen (15', 15") zu verschieben und deren Ausrichtung mit der Schleifscheibe (14) und der Schneidlinie (C) zu erleichtern.

8. Schneid- und Anfaskopf nach Anspruch 1, **dadurch gekennzeichnet, dass** die Klingen (12, 13) von jeweiligen Elektrospindeln (30, 31) oder einer einzelnen Elektrospindel (33) angetrieben werden, die mit den Klingen (12, 13) über einen Riemenantrieb oder dergleichen verbunden sind.

9. Schneid- und Anfaskopf, wie in einem oder mehreren der vorhergehenden Ansprüche beansprucht, **dadurch gekennzeichnet, dass** die Klingen (12, 13) eine im wesentlichen Scheibenform aufweisen und die Schleifscheibe (14) einen im wesentlichen V-förmigen Querschnitt aufweist.

10. Schneid- und Anfaskopf, wie in einem oder mehreren der vorhergehenden Ansprüche beansprucht, **dadurch gekennzeichnet, dass** die Schleifscheibe (14) an einer im wesentlichen vertikalen Führung (26') montiert ist und durch elastische Mittel (27) nach unten gedrückt wird, die durch Schraubenmittel oder dergleichen eingestellt werden können, um den Arbeitsdruck während des Anfasens einzustellen.

11. Schneid- und Anfaskopf nach Anspruch 1, **gekennzeichnet durch** ein Paar Leerlaufräder (28), die der Schleifscheibe (14) auf gegenüberliegenden Seiten zugeordnet sind und einen kleineren Durchmesser als die Schleifscheibe (14) aufweisen, derart, dass ihre Außenfläche (29) Grenzstoppmittel zum Einstellen der Abschrägungstiefe der Platte (L) definiert.

12. Schneid- und Anfaskopf nach Anspruch 1, **gekennzeichnet durch** ein Paar Schleifscheiben (14', 14"), die an dem Rahmen (11) in einer symmetrischen Position in Bezug auf eine im wesentlichen vertikale Ebene (π) angebracht sind, die durch die Schnittlinie (C) verläuft, wobei die Schleifscheiben (14', 14") im Wesentlichen orthogonal zueinander sind und in Längsrichtung versetzt sind, um entsprechende Abfasungen (G', G") zu erzeugen, die angepasst sind, um den im wesentlichen V-förmigen Querschnitt zu definieren.

13. Mehrachsige Werkzeugmaschine (2) zur Verarbeitung von Stein- und/oder Keramikplatten (L), umfassend:
- mindestens einen im wesentlichen horizontalen Hauptträger (3), der dazu ausgelegt ist, sich entlang der ersten am Boden befestigten Längsführungseinrichtung (4) zu bewegen;
- mindestens einen im wesentlichen horizontalen Sekundärträger (5), der dem Hauptträger (3) funktionsfähig zugeordnet ist;
- Mittel zum diskontinuierlichen Zuführen von Brammen (L) zum Be- und Entladen derselben;
- einen oder mehrere Schneid- und Anfasköpfe (1), die an dem Sekundärträger (5) zur Bearbeitung der Brammen (L) angebracht sind;
**dadurch gekennzeichnet, dass** der eine oder die mehreren Schneid- und Anfasungsköpfe einem oder mehreren der vorhergehenden Ansprüche entsprechen, wobei der eine oder die mehreren Schneid- und Anfasungsköpfe (1) so angepasst sind, dass sie entlang der zweiten, dem Sekundärträger (5) zugeordneten Führungseinrichtung (6) gleiten, zum Erzeugen von Schnitten und Fasen in Richtungen parallel zu einer gemeinsamen Schneid- und Fasenlinie (C) in einem einzigen Durchgang.

14. Verfahren zum Schneiden und Anfasen einer Stein- oder Keramikplatte (L) mittels eines oder mehrerer Schneid- und Anfaserköpfe (1) nach einem oder mehreren der Ansprüche 1 bis 13, wobei das Verfahren die folgenden Schritte umfasst:
a) Aufbringen einer Platte (L) mit einer im wesentlichen konstanten Dicke (s) auf eine Auflagefläche (8);
b) Bewegen von mindestens einem Schneid- und Anfaskopf (1) mit ersten (12) und zweiten (13) Schneidklingen entlang einer Schnittlinie (C), wobei der Schneidkopf (1) mindestens eine Anfasschleifscheibe (14) mit einem im wesentlichen "V" -förmiger Querschnitt aufweis;
c) Vorschneiden die Platte (L) durch Betätigen der ersten Klinge (12) entlang der Schnittlinie (C) mit einer einstellbaren Tiefe (h₁), die kleiner als die Dicke (s) der Platte (L) ist;
d) Anfasen der vorgeschnittenen Platte (L) entlang der Linie (C) durch Betätigen der Schleifscheibe (14);
e) endgültiges Schneiden der vorgeschnittenen und abgeschrägten Platte (L) entlang der Schnittlinie (C) durch Betätigen der zweiten Klinge (13);
wobei die erste Klinge (12), die mindestens eine Schleifscheibe (14) und die zweite Klinge (13) nacheinander entlang der Schnittlinie (C) zum Vorschneiden (T₁) ausgerichtet sind, um die Platte (L) in einem einzigen Durchgang zu vorschneiden (T₁), abfasen (G) und endgültig schneiden (T₂); und
wobei die relative Höhe (h_{R}) der ersten Klinge (12) und der zweiten Klinge (13) geändert wird, um eine konstante Höhenposition einer der Klingen (12, 13) oder der Schleifscheibe (14) aufrechtzuerhalten.

## Revendications

1. Tête de coupe et de chanfreinage (1) destinée à être utilisée dans une machine-outil multiaxiale (2) pour le traitement de dalles de pierre et/ou de céramique (L), laquelle tête (1) comprend:
- un chariot (9) mobile sur la dalle (L);
- un châssis porte-outils (11) monté sur ledit chariot (9) et adapté pour supporter au moins une première lame (12) et une seconde lame (13), ayant des axes de rotation sensiblement parallèles (R₁, R₂);
- des moyens de réglage (21) pour régler la hauteur relative (h_{R}) desdites lames (12, 13) et leur profondeur de coupe (h₁, h₂)
dans lequel lesdites lames (12, 13) sont sensiblement verticales, sensiblement alignées et décalées verticalement l'une de l'autre de sorte que ladite première lame (12) effectue la prédécoupe et que ladite seconde lame (13) effectue la coupe finale de la dalle (L), ou vice versa;
**caractérisé en ce qu'**elle comprend au moins une meule (14) montée sur ledit châssis (11) pour créer un chanfrein (G) le long d'une ligne de coupe (C) sensiblement alignée avec ladite première lame (12) et ladite seconde lame (13) , lesdites lames (12, 13) et ladite meule (14) étant configurées pour couper et chanfreiner la dalle (L) en un seul passage, ledit châssis (11) étant articulé audit chariot (9) via un axe sensiblement horizontal (22), parallèle auxdits axes de rotation (R₁, R₂) pour permettre audit châssis (11) de pivoter, ledit axe (22) étant situé le long dudit châssis (11) à proximité de ladite seconde lame (13) ou de ladite meule (14) pour changer la hauteur relative (h_{R}) desdites lames (12, 13).

2. Tête de coupe et de chanfreinage selon la revendication 1, **caractérisée en ce que** ledit axe (22) est située à proximité d'une première extrémité longitudinale (18) dudit châssis (11) et au-dessus de ladite deuxième lame (13) de sorte que cette dernière maintient sensiblement une hauteur constante en réponse au mouvement de pivotement dudit châssis (11) changeant ainsi uniquement la hauteur de ladite première lame (12).

3. Tête de coupe et de chanfreinage selon la revendication 1, **caractérisée en ce que** ledit axe (22) est dans une position intermédiaire entre les extrémités longitudinales (18, 19) dudit châssis (11) et au-dessus de ladite meule (14), de sorte que ce dernier maintient une hauteur sensiblement constante en réponse au mouvement de pivotement dudit châssis (11).

4. Tête de coupe et de chanfreinage selon la revendication 1, **caractérisée en ce que** lesdits moyens de réglage (21) comprennent un actionneur (25) interposé entre ledit chariot (9) et ledit châssis (11) pour communiquer un mouvement de pivotement contrôlé audit châssis (11).

5. Tête de coupe et de chanfreinage selon la revendication 4, **caractérisée en ce que** ledit actionneur (25) a une extrémité fixée audit chariot (9) dans une position décalée verticalement par rapport audit axe (22) et une extrémité opposée reliée audit châssis (11) à proximité d'une seconde extrémité longitudinale (19) dudit châssis (11) et distale dudit axe (22).

6. Tête de coupe et de chanfreinage selon la revendication 1, **caractérisée en ce que** lesdits moyens de réglage (21) comprennent au moins une glissière sensiblement verticale (26) associée à l'une desdites lames (12, 13), un deuxième actionneur (25') étant prévu, qui agit sur ladite au moins une glissière (26) pour lui permettre de se déplacer indépendamment de l'autre desdites lames (13, 12) changeant ainsi leur hauteur relative (h_{R}).

7. Tête de coupe et de chanfreinage selon la revendication 1, **caractérisée en ce que** lesdites lames (12, 13) sont clavetées sur des arbres rotatifs filetés extérieurement respectifs (15', 15"), chacun comprenant une paire d'écrous annulaires filetés intérieurement (16), chacune de ladite paire d'écrous annulaires (16) étant associée auxdites lames (12, 13) sur leurs côtés opposés pour translater chacune desdites lames (12, 13) le long de leurs arbres rotatifs respectifs (15', 15") et faciliter son alignement avec ladite meule (14) et ladite ligne de coupe (C).

8. Tête de coupe et de chanfreinage selon la revendication 1, **caractérisée en ce que** lesdites lames (12, 13) sont entraînées par des électrobroches respectives (30, 31) ou une seule électrobroche (33) reliée auxdites lames (12, 13) via une entraînement par courroie ou similaire.

9. Tête de coupe et de chanfreinage selon l'une ou plusieurs des revendications précédentes, **caractérisée en ce que** lesdites lames (12, 13) ont une forme sensiblement de disque et ladite meule (14) a une section transversale sensiblement en forme de V.

10. Tête de coupe et de chanfreinage selon une ou plusieurs des revendications précédentes, **caractérisée en ce que** ladite meule (14) est montée sur un guide sensiblement vertical (26') et est poussée vers le bas par des moyens élastiques (27) réglables par des moyens de vis ou analogues pour régler la pression de travail pendant le chanfreinage.

11. Tête de coupe et de chanfreinage selon la revendication 1, **caractérisée en ce qu'**elle comprend une paire de roues folles (28) associées à ladite meule (14) sur des côtés opposés de celle-ci et ayant un diamètre plus petit que ladite meule (14) pour définir des moyens de butée avec leur surface extérieure (29) pour régler la profondeur de chanfreinage de la dalle (L).

12. Tête de coupe et de chanfreinage selon la revendication 1, **caractérisée en ce qu'**elle comprend une paire de meules (14', 14") montées sur ledit châssis (11) dans une position symétrique par rapport à un plan sensiblement vertical (π) passant par ladite ligne de coupe (C), lesdites meules (14', 14") étant sensiblement orthogonales l'une à l'autre et décalées longitudinalement pour créer des chanfreins respectifs (G', G") qui sont adaptés pour définir ladite section transversale sensiblement en forme de V.

13. Machine-outil multiaxiale (2) pour le traitement de dalles de pierre et/ou de céramique (L), comprenant:
- au moins une poutre principale sensiblement horizontale (3), qui est apte à se déplacer le long de premiers moyens de guidage longitudinal (4) solidaires du sol;
- au moins une poutre secondaire sensiblement horizontale (5) qui est associée de manière opérationnelle à ladite poutre principale (3);
- des moyens d'alimentation discontinue de dalles (L) pour leur chargement/déchargement;
- une ou plusieurs têtes de coupe et de chanfreinage (1) montées sur ladite poutre secondaire (5) pour traiter les dalles (L);
**caractérisé en ce que** lesdites une ou plusieurs têtes de coupe et de chanfreinage (1) sont selon une ou plusieurs des revendications précédentes, lesdites une ou plusieurs têtes de coupe et de chanfreinage (1) étant adaptées pour glisser le long de seconds moyens de guidage (6) associés à ladite poutre secondaire (5) pour créer des coupes et des chanfreins dans des directions parallèles à une ligne de coupe et de chanfreinage commune (C) en un seul passage.

14. Procédé de découpe et de chanfreinage d'une pierre ou d'une dalle de céramique (L) au moyen d'une ou plusieurs têtes de coupe et de chanfreinage (1) selon une ou plusieurs des revendications 1 à 13, lequel procédé comprend les étapes suivantes:
a) placer une dalle (L) avec une épaisseur (s) sensiblement constante sur une surface de support (8);
b) déplacer au moins une tête de coupe et de chanfreinage (1) ayant une première (12) et une seconde (13) lames de coupe le long d'une ligne de coupe (C), ladite tête de coupe (1) ayant au moins une meule de chanfreinage (14) avec un section transversale sensiblement en forme de "V";
c) prédécouper la dalle (L) en actionnant ladite première lame (12) le long de ladite ligne de coupe (C) avec une profondeur réglable (h₁) qui est inférieure à l'épaisseur (s) de la dalle (L);
d) chanfreiner la dalle prédécoupée (L) le long de ladite ligne (C) en actionnant ladite meule (14);
e) enfin couper la dalle prédécoupée et chanfreinée (L) le long de ladite ligne de coupe (C) en actionnant ladite seconde lame (13);
dans lequel ladite première lame (12), ladite au moins une meule (14) et ladite seconde lame (13) sont alignées successivement le long de ladite ligne de coupe (C) pour pré-découper (T₁), chanfreiner (G) et réaliser la découpe finale (T₂) de la dalle (L) en une seule passage; et
dans lequel la hauteur relative (h_{R}) de ladite première lame (12) et de ladite seconde lame (13) est modifiée pour maintenir une position de hauteur constante de l'une desdites lames (12, 13) ou de ladite meule (14).
